(19) Europäisches Patentamt / European Patent Office / Office européen des brevets

(11) **EP 3 477 749 A1**

(12) **EUROPEAN PATENT APPLICATION**
published in accordance with Art. 153(4) EPC

(43) Date of publication:
**01.05.2019 Bulletin 2019/18**

(51) Int Cl.:
***H01M 4/587*** (2010.01)    ***H01M 4/36*** (2006.01)

(21) Application number: **17815363.1**

(22) Date of filing: **19.06.2017**

(86) International application number:
**PCT/JP2017/022550**

(87) International publication number:
**WO 2017/221895 (28.12.2017 Gazette 2017/52)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **23.06.2016 JP 2016124512**

(71) Applicant: **Showa Denko K.K.
Tokyo 105-8518 (JP)**

(72) Inventors:
• **WAKIZAKA Yasuaki
Tokyo 105-8518 (JP)**
• **SATO Yoshikuni
Tokyo 105-8518 (JP)**
• **MIYAMOTO Daisuke
Tokyo 105-8518 (JP)**
• **YOSHIOKA Shunsuke
Tokyo 105-8518 (JP)**
• **KONO Daisuke
Tokyo 105-8518 (JP)**
• **IKADO Ayaka
Tokyo 105-8518 (JP)**

(74) Representative: **Strehl Schübel-Hopf & Partner
Maximilianstrasse 54
80538 München (DE)**

(54) **GRAPHITE MATERIAL AND SECONDARY BATTERY ELECTRODE USING SAME**

(57) The present invention provides:
a graphite material, comprising high crystallinity graphite and spherical graphite, in which high crystallinity graphite:
(1) a rhombohedral crystal ratio by X-ray diffractometry is 0.02 or less,
(2) Lc is 90 nm or more,
(3) when a pressure of 1 GPa for 10 seconds is applied to the high crystallinity graphite, the increment rate of the BET specific surface area after applying the pressure to the BET specific surface area before applying the pressure is 90% or less, and
(4) $D_{10}$ is 5.0 $\mu$m or more; and
in which spherical graphite:
(1) a median of the circularity is 0.90 or more, and
(2) a tapping density is 1.20 g/cm3 or more;
and the ratio by mass of the high crystallinity graphite and the spherical graphite is 95:5 to 40:60;
an electrode using the graphite material as an electrode active material; and
a lithium ion secondary battery using the electrode.

EP 3 477 749 A1

**Description**

Technical Field

The present invention relates to a graphite material that can be used for an electrode (preferably a negative electrode) for a secondary battery such as a lithium ion secondary battery, and an electrode for a secondary battery using the graphite material.

Background Art

As a power source of a mobile device, or the like, a lithium ion secondary battery is mainly used. In recent years, the function of the mobile device or the like is diversified, resulting in increasing in power consumption thereof. Therefore, a lithium ion secondary battery is required to have an increased battery capacity and, simultaneously, to have an enhanced charge/discharge cycle characteristic. In addition, since the reduction in energy density due to the expansion of a battery associated with the repeated use becomes a problem, suppressing the expansion of a battery is required.

In applications for automobiles, such as battery electric vehicles (BEV) and hybrid electric vehicles (HEV), a long-term cycle characteristic over 10 years and a high volume energy density for extending a cruising distance are required, which requirements are severe as compared to those in mobile applications.

In the lithium ion secondary battery, generally, a lithium salt, such as lithium cobaltate, is used as a positive electrode active material, and a carbonaceous material, such as graphite, is used as a negative electrode active material.

Graphite is classified into natural graphite and artificial graphite. Among those, natural graphite is available at a low cost and has a high discharge capacity due to its high crystallinity. However, as natural graphite has a scale-like shape, if natural graphite is formed into a paste together with a binder and applied to a current collector, natural graphite is aligned in one direction. When a secondary battery provided with such an electrode is charged, the electrode expands only in one direction, which degrades the performance of the battery. The swelling of the electrode leads to the swelling of the battery, which may cause cracks in the negative electrode due to the swelling or may damage the substrates adjacent to the battery due to the detachment of a paste from the current collector. Therefore, it is an issue to be solved. Natural graphite, which has been granulated and formed into a spherical shape, is proposed, however, the spherodized natural graphite is crushed to be aligned by the press in the course of electrode production. Further, as the spherodized natural graphite expands and contracts, the electrolyte intrudes inside the particles of the natural graphite to cause a side reaction. Therefore, the electrode material made of such natural graphite is inferior in cycle characteristics. Besides, it is very difficult for the battery to maintain a high energy density for a long term due to the large electrode expansion.

In order to solve those problems, JP 3534391 B (Patent Document 1) proposes a method involving coating carbon on the surface of the natural graphite processed into a spherical shape. However, the material produced by the method described in Patent Document 1 can address a high-capacity, a low-current, and an intermediate-cycle characteristic required in certain applications, but it is very difficult for the material to satisfy the requests such as a large current and an ultralong-term cycle characteristic of a large battery.

Artificial graphite typified by graphitized articles of petroleum, coal pitch, coke and the like is available at a relatively low cost. However, although a graphitized article of needle-shaped coke of high crystallinity shows a high discharge capacity, it is formed into a scale-like shape and is easy to be oriented in an electrode. In order to solve this problem, the method described in JP 3361510 B (Patent Document 2) yields results. The method according to Patent Document 2 can allow the use of not only fine powder of an artificial graphite material but also fine powder of a natural graphite, or the like, and exhibits very excellent performance for a negative electrode material for the mobile applications. However, its production method is cumbersome and sufficient cycle characteristics cannot be attained.

Negative electrode materials using so-called hard carbon and amorphous carbon described in JP H07-320740 A (Patent Document 3) are excellent in a characteristic with respect to a large current and also have a relatively satisfactory cycle characteristic. However, the volume energy density of the negative electrode material is too low and the price of the material is very expensive, and thus, such negative electrode materials are only used for some special large batteries.

JP 4738553 B (Patent Document 4) discloses artificial graphite being excellent in cycle characteristics but there was room for improvement on the energy density per volume.

JP 2001-23638 (Patent Document 5) discloses an artificial graphite negative electrode produced from needle-shaped green coke (coke as it is taken out from the coking device, which coke generates needle-shaped coke through calcination). Although the electrode showed some improvement in an initial charge and discharge efficiency compared to an electrode of conventional artificial graphite, it was inferior in a discharge capacity compared to an electrode of a natural graphite material.

JP 2005-515957 A (Patent Document 6) discloses an artificial graphite negative electrode produced from cokes coated with petroleum pitch in a liquid phase. In the negative electrode, the electrode capacity density has remained as an issue to be solved. Also, the production involves an operation of using large quantities of organic solvent and evaporating it, and the production method is cumbersome.

JP 2001-236950 A (Patent Document 7) discloses a negative electrode using a mixed active material of mesophase-microbead carbon powder and flaky or aggregated graphite. The electrode has been improved in cycle characteristics by mixing the raw materials, but there are outstanding issues in the cycle characteristics and the suppression of the electrode expansion for use in small-sized battery applications.

Prior Art

Patent Documents

Patent Document 1: JP 3534391 B1 (US Patent No. 6,632,569)
Patent Document 2: JP 3361510 B1 (US Patent No. 6,344,296)
Patent Document 3: JP 07-320740 A (US Patent No. 5,587,255)
Patent Document 4: JP 4738553 B2 (US Patent No. 8,372,373)
Patent Document 5: JP 2001-023638 A
Patent Document 6: JP 2005-515957 A (US 2003/0160215 A1)
Patent Document 7: JP 2001-236950 A

DISCLOSURE OF THE INVENTION

Problems to be Solved by the Invention

An object of the present invention is, focusing on small-sized batteries and the like, to provide a negative electrode material for a lithium ion secondary battery with which a high electrode density can be attained and the decrease in capacity after charge/discharge cycles and the decrease in the electrode capacity due to the electrode expansion can be suppressed.

Means to Solve Problem

The present invention comprises a structure as follows.

[1] A graphite material, comprising high crystallinity graphite and spherical graphite, in which high crystallinity graphite:

(1) a rhombohedral crystal ratio by X-ray diffractometry is 0.02 or less,
(2) a thickness in a c-axis direction of crystallite Lc is 90 nm or more,
(3) when a pressure of 1 GPa for 10 seconds is applied to the high crystallinity graphite, the increment rate of the BET specific surface area after applying the pressure to the BET specific surface area before applying the pressure is 90% or less, and
(4) a 10% particle diameter in a volume-based cumulative particle size distribution, $D_{10}$, is 5.0 $\mu$m or more; and

in which spherical graphite:

(1) a tapping density is 1.20 g/cm3 or more, and
(2) a median of the circularity is 0.90 or more;

and the ratio by mass of the high crystallinity graphite and the spherical graphite is 95:5 to 40:60.
[2] The graphite material according to [1] above, wherein the 50% particle diameter in a volume-based cumulative particle size distribution, $D_{50}$, of the high crystallinity graphite is 25.0 $\mu$m or less.
[3] The graphite material according to [1] or [2] above, wherein the high crystallinity graphite is artificial graphite.
[4] The graphite material according to any one of [1] to [3] above, wherein particles of the high crystallinity graphite are solid.
[5] The graphite material according to any one of [1] to [4] above, wherein the spherical graphite is artificial graphite.
[6] The graphite material according to any one of [1] to [5] above, wherein particles of the spherical graphite are solid.
[7] A negative electrode for a secondary battery comprising, as an active material, the graphite material of any one of [1] to [6].
[8] The negative electrode according to [7] above, wherein the secondary battery is a lithium ion secondary battery.

Effects of Invention

The graphite material in an embodiment of the present invention can be used as a negative electrode material for a lithium ion secondary battery, with which the decrease in capacity after charge/discharge cycles and the decrease in the electrode capacity due to the electrode expansion is more suppressed compared to a conventional material.

Mode for Carrying out Invention

The graphite material in an embodiment of the present invention comprises high crystallinity graphite and spherical graphite.

(1) High crystallinity graphite

The high crystallinity graphite in an embodiment of the present invention has a rhombohedral crystal ratio (the ratio of rhombohedral crystals to the total of rhombohedral crystals and hexagonal crystals) by X-ray diffractometry (XRD) of 0.02 or less. A smaller rhombohedral crystal ratio is better, and the rate is preferably 0.01 or less, more preferably 0.005 or less. When the high crystallinity graphite has a high content of rhombohedral crystals, it results in a large change in a structure at the time of charge and discharge. Therefore, the decrease in the battery capacity and the electrode density becomes larger, resulting in a significant decrease in the energy density of the battery.

The high crystallinity graphite in an embodiment of the present invention has a crystallite size in a (002) plane, Lc, of 90 nm or more. In the production of an electrode, the electrode density (density of an active material layer) is increased by subjecting the active material to press treatment (for example, an electrode density of 1.7 $g/cm^3$ or more). When Lc is larger, particles can be easily deformed. Hence, the electrode density can be increased and the battery size can be reduced. For this reason, Lc is more preferably 95 nm or more and still more preferably 100 nm of more.

In the present description, Lc can be measured using a powder X-ray diffraction (XRD) method by a known method (see I. Noda and M. Inagaki, Japan Society for the Promotion of Science, 117th Committee material, 117-71-A-1 (1963), M. Inagaki et al., Japan Society for the Promotion of Science, 117th committee material, 117-121-C-5 (1972), M. Inagaki, "Tanso" (Carbon), 1963, No. 36, pages 25-34). Specifically, the values measured by a method described in the Examples are defined as the rhombohedral crystal ratio and Lc.

In an embodiment of the present invention, the BET specific surface area of the high crystallinity graphite is preferably 0.5 $m^2/g$ to 5.0 $m^2/g$. The larger BET specific surface area makes the reaction at the time of charge and discharge more uniform, and therefore the BET specific surface area is preferably 1.0 $m^2/g$ or more, more preferably 1.9 $m^2/g$ or more. When the BET specific surface area is small, the current density at the time of charge and discharge increases, resulting in non-uniform charge and discharge reaction on the particle surface, and a larger decrease in the capacity after charge/discharge cycles and in the electrode capacity. On the other hand, when the specific surface area is too large, the battery tends to deteriorate due to increase in the side reactions. Therefore, the BET specific surface area is preferably 4.5 $m^2/g$ or less, more preferably 4.0 $m^2/g$ or less.

In the present description, the BET specific surface area is measured by a common method of measuring adsorption and desorption amount of gas per unit mass. As a measuring device, for example, NOVA-1200 can be used.

The particles of the high crystallinity graphite in an embodiment of the present invention have a stable structure and undergo a small change in a structure by the applied pressure. If the particle structure is unstable, it collapse in the pressing step of the electrode, which causes a side reaction at the time of charge and discharge and a significant decrease in the battery capacity during charge/discharge cycles. Specifically, when a pressure of 1 GPa for 10 seconds is applied to the high crystallinity graphite, the increment rate of the BET specific surface area after applying the pressure to the BET specific surface area before applying the pressure is 90% or less. The increment rate of the BET specific surface area is preferably 60% or less, more preferably 30% or less.

The high crystallinity graphite in an embodiment of the present invention has a 10% particle diameter in a volume-based cumulative particle size distribution, $D_{10}$, of 5.0 $\mu$m or more. When $D_{10}$ is too small, side reaction is often caused when a battery is produced and charge and discharge cycles are repeated. Besides, it causes decrease in a capacity and decrease in the electrode density due to non-uniform charge and discharge reaction in the electrode. The larger $D_{10}$ the better unless a 50% particle diameter in a volume-based cumulative particle size distribution, $D_{50}$, is excessively large. $D_{10}$ is preferably 5.5 $\mu$m or more, more preferably 6.0 $\mu$m or more.

$D_{50}$ of the high crystallinity graphite in an embodiment of the present invention is not particularly limited but is preferably 25.0 $\mu$m or less to attain good charge and discharge rate characteristics. $D_{50}$ is more preferably 20.0 $\mu$m or less, still more preferably 16.0 $\mu$m or less.

In the present description, $D_{10}$ and $D_{50}$ can be measured by a laser-diffractometry particle size distribution analyzer. As a laser diffraction type particle size distribution analyzer, for example, Mastersizer (registered trademark) produced by Malvern Instruments Ltd. or the like can be used.

The high crystallinity graphite in an embodiment of the present invention preferably has a particle structure in which particles are solid. Graphite particles produced by spheroidizing treatment and integrating treatment contain voids inside the particle in some cases, and such voids cause side reactions in a battery. Here, "particles not containing voids" mean that when 30 particles are observed in a cross-sectional SEM image of the particle, particles inside of which three or less of streaky voids having a length of 1 $\mu$m or more are observed are 25 or more. In a typical particle containing voids, streaky voids having a length of 1 $\mu$m or more are observed.

The high crystallinity graphite of the present invention is preferably artificial graphite because the electrode graphite expansion is suppressed and cycle characteristics are improved. The production method of the same are described in details hereinafter.

(2) Method for producing high crystallinity graphite

An example of the production method of the high crystallinity graphite as being artificial graphite is given hereinafter.

The high crystallinity graphite can be obtained by subjecting coke, natural graphite, coal, pitch and the other carbon material to heat treatment at 2500°C or higher.

When coke is used as a raw material of the high crystallinity graphite, a calcined coke or a green coke can be used as a coke. As a raw material of the coke, for example, petroleum pitch, coal pitch, coal pitch coke, petroleum coke, and a mixture thereof can be used. Particularly preferred is a coke obtained by heating the coke under an inert atmosphere, wherein the green coke is obtained by the delayed coking treatment under specific conditions.

Examples of raw materials to be passed through a delayed coker include decant oil which is obtained by removing a catalyst after the process of fluid catalytic cracking to heavy distillate at the time of crude refining, and tar obtained by distilling coal tar extracted from bituminous coal and the like at a temperature of 200°C or more and heating it to 100°C or more to impart sufficient flowability. It is desirable that these liquids are heated to 450°C or more, even 510°C or more, during the delayed coking process, at least at an inlet of the coking drum. This increases the residual carbon ratio of the coke at the time of calcination of the coke. Also, pressure inside the drum is kept at preferably an ordinary pressure or higher, more preferably 300 kPa or higher, still more preferably 400 kPa or higher to increase the capacity of a negative electrode. As described above, by performing coking under more severe conditions than usual, the reaction of the liquids is further enhanced and coke having a higher degree of polymerization can be obtained.

The obtained coke is to be cut out from the drum by water jetting, and roughly pulverized to lumps about the size of 5 centimeters with a hammer and the like. A double roll crusher and a jaw crusher can be used for the rough pulverization, and it is desirable to pulverize the coke so that the particles larger than 1 mm in size account for 90 mass% or more of the total powder when the pulverized coke is sifted using a sieve having a mesh size of 1 mm. If the coke is pulverized too much to generate a large amount of fine powder having a diameter of 1 mm or less, problems such as the fine powder stirred up after drying and the increase in burnouts may arise in the subsequent processes such as heating.

The roughly pulverized coke may be calcined. The calcination means performing heating to remove moisture and organic volatile components.

It is desirable to subject the calcined coke to graphitization because it accelerate the crystal growth.

The calcination can be performed by electric heating and flame heating using LPG, LNG, korocene, heavy oil and the like. Since the heating at 2,000°C or less is sufficient to remove moisture and volatile organic components contained in the materials, flame heating as an inexpensive heat source is preferable for mass production. When the treatment is particularly performed on a large scale, energy cost can be reduced by an inner-flame or inner-heating type heating of coke while burning fuel and the volatile organic components contained in the unheated coke in a rotary kiln.

In a raw material coke, it is desirable for the optical structures to satisfy $2.0 \leq AR(60)$, more preferably $2.2 \leq AR(60)$, and most preferably $2.25 \leq AR(60)$ when they are observed under a polarizing microscope. When the raw material is green coke, the observation under a polarizing microscope is performed after conducting the heat treatment at 1,100°C. By using such coke as a raw material, the graphite powder has a higher Lc value by graphitization, which can increase the electrode density. In the present description, a structure in which polarization can be observed is referred to as an optical structure.

Here, AR(60) indicates the aspect ratio determined as follows: in the case where the individual optical structures in the cross-section of the green coke or calcined coke as a raw material subjected to the heat treatment at 1,100°C are observed under a polarizing microscope, when areas of the optical structures are accumulated from the smallest structure in an ascending order, AR(60) represents the aspect ratio of an optical structure whose accumulated area corresponds to 60% of the total area of all the optical structures. In the observation under a polarizing microscope, a lump of calcined coke larger than several millimeters in size is embedded in resin and subjected to mirror finishing and the like to observe the cross-section thereof. Also, the observation can be conducted by the method described in, for example, "Modern Carbon Material Experimental Technology (Analysis part) edited by The Carbon Society of Japan (2001), published by Sipec Corporation, pages 1-8" and the like. When artificial graphite is produced using the coke that satisfies such conditions as a raw material, the particles of the obtained artificial graphite tend to become scale-like. Here, the resin embedding, mirror finishing, observation under a polarizing microscope and extraction of optical structures are conducted as described below.

[Resin embedding]

A double-sided adhesive tape is attached to the bottom of a sample container made of plastic with an internal volume of 30 cm$^3$, and a coke particle several millimeters or larger in size is placed on the double-sided adhesive tape. A curing agent (Curing Agent (M-agent) (trade name), produced by Nippon Oil and Fats Co., Ltd., available from Marumoto Struers K.K.) is added to cold mounting resin (Cold mounting resin #105 (trade name), produced by Japan Composite Co., Ltd., available from Marumoto Struers K.K.), and the mixture is kneaded for 30 seconds. The resultant mixture (about 5 ml) is poured slowly to the sample container to a height of about 1 cm and allowed to stand still for one day to be solidified. Next, after the solidification, the solidified sample is taken out from the container and the double-sided adhesive tape is peeled off.

[Mirror finishing]

A surface to be measured is polished with a polishing machine with a rotary polishing plate. The polishing is performed so that the polishing surface is pressed against the rotary surface. The polishing plate is rotated at 1,000 rpm. The polishing is performed successively, using #500, #1000, and #2000 of the polishing plates in this order, and finally, mirror-surface polishing is performed, using alumina (BAIKALOX type 0.3CR (trade name) with a particle diameter of 0.3 μm, produced by BAIKOWSKI, available from Baikowski Japan). The polished sample is fixed onto a preparation with clay and observed with a polarizing microscope (BX51, produced by Olympas Corporation).

[Polarizing microscope image analysis method]

The observation was performed at 200-fold magnification. An image observed with the polarizing microscope is photographed by connecting a CAMEDIA C-5050 ZOOM digital camera produced by Olympus Corporation to the polarizing microscope through an attachment. The shutter time is 1.6 seconds. Among the photographed data, images of 1,200×1,600 pixels were used for the analysis. It corresponds to investigation in a microscope field of 480 μm x 640 μm.

[Extraction of optical structures]

The extraction of optical structures was performed using ImageJ (National Institutes of Health) to discriminate blue portions, yellow portions, magenta portions and black portions. The parameters defining each color for the use of ImageJ are given below.

Table 1

|  | Hue value | Saturation value | Brightness value |
|---|---|---|---|
| Blue | 150 to 190 | 0 to 255 | 80 to 255 |
| Yellow | 235 to 255 | 0 to 255 | 80 to 255 |
| Magenta | 193 to 255 | 180 to 255 | 120 to 255 |
| Black | 0 to 255 | 0 to 255 | 0 to 120 |

The statistical processing with respect to the detected structures is performed using an external macro-file. The black portions, that is, portions corresponding not to optical structures but to resin are excluded from the analysis, and the aspect ratio of each of blue, yellow and magenta optical structures are to be calculated. Here, the aspect ratio of individual optical structures is defined as follows: When a long axis denotes the longest line segment inside the optical structure shape extracted from the polarizing microscope image, and the quadrangle, the two sides of which are line segments parallel to the long axis, is circumscribed to the optical structure shape, the aspect ratio is calculated from the long side and short side of the quadrangle as in the following expression: (aspect ratio)=(length of the long side)/(length of the short side).

There is no limitation for the pulverization method of the calcined coke, and it can be conducted using a known jet mill, hammer mill, roller mill, pin mill, vibration mill or the like. Besides, multiple pulverization processes may be provided, and a device may be selected or multiple devices may be combined for the purpose of arranging the particle shape.

After the pulverization, fine powder is to be removed. The method of removing fine powder is not particularly limited and, for example, air classification and a sieve can be used. It is preferable to remove fine powder after the pulverization, but the removal may be conducted not right after the pulverization but immediately before graphitization or after graphitization as long as $D_{10}$ of the high crystallinity graphite particles eventually becomes a desirable diameter.

After adjusting the particle size, graphitization is performed. Graphitization is performed at a temperature of 2,400°C or higher, more preferably 2,800°C or higher, and still more preferably 3,050°C or higher, and the most preferably 3,150°C or higher. The treatment at a higher temperature further promotes the development of the graphite crystals and an electrode having a higher storage capacity of lithium ion can be obtained. On the other hand, if the temperature is too high, it is difficult to prevent the sublimation of the graphite powder and an unduly large amount of energy is required. Therefore, the graphitization is preferably 3,600°C or lower.

It is desirable to use electric energy to attain the above temperature. Electric energy is more expensive than other heat source and in particular to attain a temperature of 2,000°C or higher, an extremely large amount of electricity is consumed. Therefore, it is preferable not to consume the electric energy except for graphitization, and to calcine the carbon material prior to the graphitization to remove the organic volatile content: i.e. to make the fixed carbon content be 95% or more, preferably 98% or more, and still more preferably 99% or more.

It is desirable that the material is not subjected to pulverizing treatment after graphitization. Note that the material may be de-agglomerated after the graphitization to such a degree that the particles are not pulverized.

When an electrode is manufactured by employing as an active material graphite not pulverized after graphitization, the contact between the adjacent graphite particles inside the electrode is stabilized by compressing the electrode. As a result, it is possible to make the electrode suitable for the repeated charging and discharging of a battery.

(3) Spherical graphite

In the spherical graphite in an embodiment of the present invention, particles have a median circularity of preferably 0.90 or more, more preferably 0.92 or more.

The median circularity is calculated from the frequency distribution of the circularity obtained from the analysis of 10,000 particles or more in the LPF mode by using a flow particle image analyzer (FPIA-3000, manufactured by Sysmex Corporation). Here, circularity is a value obtained by dividing the circumferential length of a circle having the same area with that of the observed particle image by the circumferential length of the particle image, and the particle image is closer to a true circle when its circularity is closer to 1. When S represents the area and L represents the circumferential of the particle image, circularity is represented by the following formula.

$$\text{Circularity} = (4\Pi S)^{1/2}/L$$

In the spherical graphite in an embodiment of the present invention, the tapping density is preferably 1.20 g/cm$^3$ or more. If the tapping density is high, the spherical graphite particles are densely aligned at the time of drying the applied electrode paste. At this time, spherical graphite particles efficiently enter between the high crystallinity graphite particles, and as a result the orientation of non-spherical particles inside the electrode layer can be efficiently suppressed. The tapping density is preferably 1.30 g/cm$^3$ or more, more preferably 1.35 g/cm$^3$ or more.

The tapping density is a density obtained by measuring the volume and mass of 100 g of a powder tapped 400 times with an Autotap manufactured by Quantachrome Instruments. The measurement method is based on ASTM B527 and JIS K5101-12-2, and the fall height of the Autotap in the tap density measurement is 5 mm.

The spherical graphite in an embodiment of the present invention is preferably artificial graphite because the electrode graphite expansion is suppressed and cycle characteristics are improved.

The spherical graphite in an embodiment of the present invention preferably has a particle structure in which particles are solid. Graphite particles produced by spheroidizing treatment and integrating treatment contain voids inside the particle in some cases, and such voids cause side reactions in a battery. Here, "particles not containing voids" mean that when 30 particles are observed in a cross-sectional SEM image of the particle, particles inside of which three or less of streaky voids having a length of 1 $\mu$m or more are observed are 25 or more. In a typical particle containing voids, streaky voids having a length of 1 $\mu$m or more are observed.

(4) Graphite material

The graphite material in an embodiment of the present invention comprises the above-mentioned high crystallinity graphite and the above-mentioned spherical graphite.

In an electrode using the high crystallinity graphite, the electrode density can be increased and side reactions rarely occur. However, if only the crystallinity graphite is used, suppression of the decrease in the electrode density due to the electrode expansion at the time of charge and discharge remains an issue, and therefore the spherical graphite is mixed and used. In the high crystallinity graphite, the aspect ratio of the particles tends to become large due to a large Lc. When the particles have a large aspect ratio, the particles are oriented in the electrode layer, and the electrode structure is improved by mixing spherical graphite to suppress the particle orientation.

The method for mixing the high crystallinity graphite and the spherical graphite is not particularly limited as long as it can fully implement homogeneous mixing. For example, the high crystallinity graphite and the spherical graphite can be mixed using a ribbon mixer, a Nauta mixer, a conical blender and the like. Generally, graphitized high crystallinity graphite and graphitized spherical graphite are mixed and the obtained mixed graphite is used for a battery. Besides, after mixing a raw material prior to graphitization for manufacturing high crystallinity graphite and a raw material prior to graphitization for spherical graphite, and the mixture may be subjected to graphitization treatment. In addition, high crystallinity graphite and spherical graphite may be mixed with a solvent for slurry together with other electrode components such as an electrode binder, a thickener, and a conductive assistant at the time of manufacturing an electrode.

The ratio of mass between the high crystallinity graphite and the spherical graphite is 95:5 to 40:60. When the ratio of the spherical graphite is too high, the contact between the graphite particles become unstable, thereby increasing the electric resistance in the electrode. In addition, the relative position between the particles is shifted at the time of charge and discharge, which reduces the electrode density and causes a problem in battery characteristics. When the ratio of the spherical graphite is too low, the particles are oriented and the electrode density tends to be reduced. The ratio of mass is preferably 85:15 to 60:40, more preferably 85:15 to 70:30.

(5) Carbon material for battery electrodes

The above-mentioned graphite material can be used as a carbon material for battery electrodes. The carbon material for battery electrodes may be used as, for example, a negative electrode active material and an agent for imparting conductivity to a negative electrode of a lithium ion secondary battery.

To a carbon material for battery electrodes, an active material (electrode active material) other than the above-mentioned graphite material can be blended. Examples of the other active material include graphite, soft carbon, hard carbon, and a silicon compound. In the case where the other active materials are blended, the total blending ratio of the other active materials is preferably 0.01 to 50 parts by mass, more preferably 0.01 to 10 parts by mass to 100 parts by mass of the total of the high crystallinity graphite and the spherical graphite. By blending the other active materials, the graphite material can be added with excellent properties of other active materials while maintaining the excellent characteristics of the mixture of the high crystallinity graphite and the spherical graphite. With respect to mixing of these materials, the material to be mixed can be selected and its mixing ratio can be determined appropriately depending on the required battery characteristics.

Carbon fiber may also be mixed with the carbon material for battery electrodes. In the case where carbon fiber is mixed, the mixing amount is 0.01 to 20 parts by mass, preferably 0.5 to 5 parts by mass in terms of 100 parts by mass of the total of the high crystallinity graphite and the spherical graphite.

Examples of the carbon fiber include: organic-derived carbon fiber such as PAN-based carbon fiber, pitch-based carbon fiber, and rayon-based carbon fiber; and vapor-grown carbon fiber. Of those, in the case of allowing the carbon fiber to adhere to the surfaces of the graphite powder, particularly preferred is vapor-grown carbon fiber having high crystallinity and high heat conductivity.

Vapor-grown carbon fiber is, for example, produced by: using an organic compound as a raw material; introducing an organic transition metal compound as a catalyst into a high-temperature reaction furnace with a carrier gas to form fiber; and then conducting heat treatment (see, for example, JP S62-49363 B and JP 2778434 B2). The vapor-grown carbon fiber has a fiber diameter of preferably 2 to 1,000 nm, more preferably 10 to 500 nm, and has an aspect ratio (fiber length/fiber diameter) of preferably 10 to 15,000.

Examples of the organic compound serving as a raw material for carbon fiber include gas of toluene, benzene, naphthalene, ethylene, acetylene, ethane, natural gas, carbon monoxide or the like, and a mixture thereof. Of those, an aromatic hydrocarbon such as toluene or benzene is preferred.

The organic transition metal compound includes a transition metal element serving as a catalyst. Examples of the transition metal element include metals of Groups III to XI of the periodic table. Preferred examples of the organic transition metal compound include compounds such as ferrocene and nickelocene.

The carbon fiber may be obtained by pulverizing or disintegrating long fiber obtained by vapor deposition or the like. Further, the carbon fiber may be agglomerated in a flock-like manner.

Carbon fiber which has no pyrolysate derived from an organic compound or the like adhering to the surface thereof or carbon fiber which has a carbon structure with high crystallinity is preferred.

The carbon fiber with no pyrolysate adhering thereto or the carbon fiber having a carbon structure with high crystallinity can be obtained, for example, by firing (heat-treating) carbon fiber, preferably, vapor-grown carbon fiber in an inactive gas atmosphere. Specifically, the carbon fiber with no pyrolysate adhering thereto is obtained by heat treatment in inactive gas such as argon at about 800°C to 1,500°C. Further, the carbon fiber having a carbon structure with high crystallinity is obtained by heat treatment in inactive gas such as argon preferably at 2,000°C or more, more preferably 2,000°C to 3,000°C.

It is preferred that the carbon fiber contains a branched fiber. In the branched portions, the carbon fiber may have hollow structures communicated with each other. In the case where the carbon fiber has hollow structures, carbon layers forming a cylindrical portion of the fiber are formed continuously. The hollow structure in carbon fiber refers to a structure in which a carbon layer is wound in a cylindrical shape and includes an incomplete cylindrical structure, a structure having a partially cut part, two stacked carbon layers connected into one layer, and the like. Further, the cross-section is not limited to a complete circular shape, and the cross-section of the cylinder includes a near-oval or near-polygonal shape.

Further, the average interplanar spacing of a (002) plane of carbon fiber by the X-ray diffraction method, $d_{002}$, is preferably 0.3440 nm or less, more preferably 0.3390 nm or less, particularly preferably 0.3380 nm or less. Further, it is preferred that a thickness in a c-axis direction of crystallite, Lc, is 40 nm or less.

$d_{002}$ can be measured using a powder X-ray diffraction (XRD) method by a known method (see I. Noda and M. Inagaki, Japan Society for the Promotion of Science, 117th Committee material, 117-71-A-1 (1963), M. Inagaki et al., Japan Society for the Promotion of Science, 117th committee material, 117-121-C-5 (1972), M. Inagaki, "Tanso" (Carbon), 1963, No. 36, pages 25-34).

(6) Paste for electrodes

The paste for an electrode in a preferred embodiment of the present invention contains the above-mentioned carbon material for battery electrodes (graphite material) and a binder. The paste for an electrode can be obtained by kneading the carbon material for battery electrodes with a binder. Each of the components of the carbon material for battery electrodes may be mixed at the time of kneading with a binder. A known device such as a ribbon mixer, a screw-type kneader, a Spartan granulator, a Loedige mixer, a planetary mixer, or a universal mixer may be used for kneading. The paste for an electrode may be formed into a sheet shape, a pellet shape, or the like.

Examples of the binder to be used for the paste for an electrode include known binders such as: fluorine-based polymers such as polyvinylidene fluoride and polytetrafluoroethylene; and rubber-based polymers such as styrene-butadiene rubber (SBR).

The use amount of the binder is preferably 1 to 30 parts by mass, more preferably 3 to 20 parts by mass, in terms of 100 parts by mass of the carbon material for battery electrodes.

A solvent can be used at a time of kneading. Examples of the solvent include known solvents suitable for the respective binders such as: toluene and N-methylpyrrolidone in the case of a fluorine-based polymer; water in the case of rubber-based polymers; dimethylformamide and 2-propanol in the case of the other binders. In the case of the binder using water as a solvent, it is preferred to use a thickener together. It is desirable to adjust the amount of the solvent so as to obtain a viscosity at which a paste can be applied to a current collector easily.

(7) Electrode

An electrode in a preferred embodiment of the present invention comprises a formed body of the above-mentioned paste for an electrode. The electrode is obtained, for example, by applying the above-mentioned paste for an electrode to a current collector, followed by drying and pressure forming.

Examples of the current collector include metal foils and mesh of aluminum, nickel, copper, stainless steel and the like. The coating thickness of the paste is generally 50 to 200 $\mu$m. When the coating thickness becomes too large, an electrode may not be accommodated in a standardized battery container. There is no particular limitation for the paste coating method and, for example, it is possible to apply the paste with a doctor blade or a bar coater. Next, the paste is dried, followed by pressure forming with a press roll and the like.

Examples of the pressure forming include roll pressurization, plate pressurization, and the like. As the electrode density of the electrode increases, the battery capacity per volume generally increases. For example, when the active material is graphite only, the electrode density of the electrode obtained using the paste for electrodes is generally 1.0 to 2.0 g/cm$^3$, and the design can be determined according to the usage of the battery.

The electrode density in an embodiment of the present invention is preferably 1.70 g/cm$^3$ or more. The same holds true for the case where the electrode contains active materials other than the carbon material for battery electrodes.

The electrode thus obtained is suitable for a negative electrode of a battery, in particular, a negative electrode of a secondary battery.

(8) Battery

The above-described electrode can be employed as an electrode in a battery or a secondary battery.

The battery or secondary battery in a preferred embodiment of the present invention is described by taking a lithium ion secondary battery as a specific example. The lithium ion secondary battery has a structure in which a positive electrode and a negative electrode are soaked in an electrolytic solution or an electrolyte.

As the negative electrode, the above-mentioned electrode is used.

In the positive electrode of the lithium ion secondary battery, a transition metal oxide containing lithium is generally used as a positive electrode active material, and preferably, an oxide mainly containing lithium and at least one kind of transition metal element selected from the group consisting of Ti, V, Cr, Mn, Fe, Co, Ni, Mo, and W, which is a compound having a molar ratio of lithium to a transition metal element of 0.3 to 2.2, is used. More preferably, an oxide mainly containing lithium and at least one kind of transition metal element selected from the group consisting of V, Cr, Mn, Fe, Co and Ni.

It should be noted that Al, Ga, In, Ge, Sn, Pb, Sb, Bi, Si, P, B, and the like may be contained in a range of less than 30% by mole with respect to the mainly present transition metal. Of the above-mentioned positive electrode active materials, it is preferred that at least one kind of material having a spinel structure represented by a general formula $Li_xMO_2$ (M represents at least one kind of Co, Ni, Fe, and Mn, and x is 0.02 to 1.2), or $Li_yN_2O_4$ (N contains at least Mn, and y is 0.02 to 2) be used.

Further, as the positive electrode active material, there may be particularly preferably used at least one kind of materials each including $Li_yM_aD_{1-a}O_2$ (M represents at least one kind of Co, Ni, Fe, and Mn, D represents at least one kind of Co, Ni, Fe, Mn, Al, Zn, Cu, Mo, Ag, W, Ga, In, Sn, Pb, Sb, Sr, B, and P with the proviso that the element corresponding to M being excluded, y=0.02 to 1.2, and a=0.5 to 1) or materials each having a spinel structure represented by $Li_z(Mn_bE_{1-b})_2O_4$ (E represents at least one kind of Co, Ni, Fe, Al, Zn, Cu, Mo, Ag, W, Ga, In, Sn, Pb, Sb, Sr, B and P, b=1 to 0.2, and z=0 to 2).

Specifically, there are exemplified $Li_xCoO_2$, $Li_xNiO_2$, $Li_xFeO_2$, $Li_xMnO_2$, $Li_xCo_aNi_{1-a}O_2$, $Li_xCO_bV_{1-b}O_2$, $Li_xCO_bFe_{1-b}O_2$, $Li_xMn_2O_4$, $Li_xMn_cCo_{2-c}O_4$, $Li_xMn_cNi_{2-c}O_4$, $Li_xMn_cV_{2-c}O_4$, and $Li_xMn_cFe_{2-c}O_4$ (where, x=0.02 to 1.2, a=0.1 to 0.9, b=0.8 to 0.98, c=1.6 to 1.96, and z=2.01 to 2.3). As the more preferred transition metal oxide containing lithium, there are given $Li_xCoO_2$, $Li_xNiO_2$, $Li_xFeO_2$, $Li_xMnO_2$, $Li_xCO_aNi_{1-a}O_2$, $Li_xMn_2O_4$, and $Li_xCo_bV_{1-b}O_z$ (x=0.02 to 1.2, a=0.1 to 0.9, b=0.9 to 0.98, and z=2.01 to 2.3). It should be noted that the value of x is a value before starting charge and discharge, and the value increases and decreases in accordance with charge and discharge.

Although $D_{50}$ of the positive electrode active material is not particularly limited, the diameter is preferably 0.1 to 50 $\mu$m. It is preferred that the volume occupied by the particle group having a particle diameter of 0.5 to 30 $\mu$m be 95% or more of the total volume. It is more preferred that the volume occupied by the particle group having a particle diameter of 3 $\mu$m or less be 18% or less of the total volume, and the volume occupied by the particle group having a particle diameter of 15 $\mu$m to 25 $\mu$m be 18% or less of the total volume. The particle size distribution can be measured using a laser diffraction particle size distribution analyzer, such as Mastersizer produced by Malvern Instruments Ltd. as a laser diffraction type measurement device of particle size distribution.

Although the specific area of the positive electrode active material is not particularly limited, the area is preferably 0.01 to 50 $m^2$/g, particularly preferably 0.2 $m^2$/g to 1 $m^2$/g by a BET method. Further, it is preferred that the pH of a supernatant obtained when 5 g of the positive electrode active material is dissolved in 100 ml of distilled water be 7 or more and 12 or less.

In a lithium ion secondary battery, a separator may be provided between a positive electrode and a negative electrode. Examples of the separator include non-woven fabric, cloth, and a microporous film each mainly containing polyolefin such as polyethylene and polypropylene, a combination thereof, and the like.

As an electrolytic solution and an electrolyte forming the lithium ion secondary battery in a preferred embodiment of the present invention is not particularly limited. For example, a known organic electrolytic solution, inorganic solid electrolyte, polymer solid electrolyte, or a mixture thereof may be used.

As an organic electrolytic solution, preferred is a solution of an organic solvent such as: an ether such as diethyl ether, dibutyl ether, ethylene glycol monomethyl ether, ethylene glycol monoethyl ether, ethylene glycol monobutyl ether, diethylene glycol monomethyl ether, diethylene glycol monoethyl ether, diethylene glycol monobutyl ether, diethylene glycol dimethyl ether, ethylene glycol phenyl ether, 1,2-dimethoxyethane, or diethoxyethane; an amide such as formamide, N-methylformamide, N,N-dimethylformamide, N-ethylformamide, N,N-diethylformamide, N-methylacetamide, N,N-dimethylacetamide, N-ethylacetamide, N,N-diethylacetamide, N,N-dimethylpropionamide, or hexamethylphosphorylamide; a sulfur-containing compound such as dimethylsulfoxide or sulfolane; a dialkyl ketone such as methyl ethyl ketone or methyl isobutyl ketone; a cyclic ether such as ethylene oxide, propylene oxide, tetrahydrofuran, 2-methoxytetrahydrofuran, or 1,3-dioxolan; a carbonate such as ethylene carbonate, butylene carbonate, diethyl carbonate, dimethyl carbonate, propylene carbonate, or vinylene carbonate; $\gamma$-butyrolactone; N-methylpyrrolidone; acetonitrile; nitromethane; or the like. There are more preferably exemplified: carbonates such as ethylene carbonate, butylene carbonate, diethyl carbonate, dimethyl carbonate, propylene carbonate, vinylene carbonate; γ-butyrolactone; 1,3-dioxolan; diethyl ether; diethoxyethane; dimethylsulfoxide; acetonitrile; tetrahydrofuran; or the like. Particularly preferred is a nonaqueous solvent like carbonate such as ethylene carbonate or propylene carbonate. One kind of those solvents may be used alone, or two or more kinds thereof may be used as a mixture.

A lithium salt is used for a solute (electrolyte) of each of those solvents. Examples of a generally known lithium salt include $LiClO_4$, $LiBF_4$, $LiPF_6$, $LiAlCl_4$, $LiSbF_6$, LiSCN, LiCl, $LiCF_3SO_3$, $LiCF_3CO_2$, $LiN(CF_3SO_2)_2$, and the like.

Examples of the polymer solid electrolyte include a polyethylene oxide derivative and a polymer containing the derivative, a polypropylene oxide derivative and a polymer containing the derivative, a phosphoric acid ester polymer, a polycarbonate derivative and a polymer containing the derivative, and the like.

It should be noted that there is no constraint for the selection of members required for the battery configuration other than the aforementioned members.

Examples

Hereinafter, the present invention is described in more detail by way of typical examples. It should be noted that these examples are merely for illustrative purposes, and the present invention is not limited thereto.

The methods for measuring physical properties of the high crystallinity graphite and the spherical graphite used in Examples and Comparative Examples are given below.

(1) Powder X-ray diffraction (XRD) measurement (Method for measuring the rhombohedral crystal ratio and Lc)

Carbon powder samples were filled in a sample plate made of glass (recessed portion of a sample plate: 18x20 mm, depth: 0.2 mm) and subjected to measurement under the following conditions:

XRD apparatus: SmartLab (registered trademark) manufactured by Rigaku
X-ray type: Cu-Kα ray
Method for removing Kβ ray: Ni filter
X-ray output: 45 kV, 200 mA
Measurement range: 5.0 to 10.0 deg.
Scanning speed: 10.0 deg./min.

Profile fitting was performed by smoothing the obtained waveform, removing the background, and removing Kα2. From the obtained I(R101) as the peak intensity of the highest peak that appears within the range of 43.0 to 43.4° and I(H100) as the peak intensity of the highest peak that appears within the range of 42.0 to 42.4°, the rhombohedral crystal ratio (ratio of the rhombohedral crystal structure to the total of the rhombohedral crystal structure and the hexagonal crystal structure) was calculated. The rhombohedral crystal ratio was defined by the following equation.

$$3 \times I(R101)/(11 \times I(H100)+3 \times I(R101))$$

Lc can be measured using a powder X-ray diffraction (XRD) method by a known method (see I. Noda and M. Inagaki, Japan Society for the Promotion of Science, 117th Committee material, 117-71-A-1 (1963), M. Inagaki et al., Japan Society for the Promotion of Science, 117th committee material, 117-121-C-5 (1972), M. Inagaki, "Tanso" (Carbon), 1963, No. 36, pages 25-34).

(2) Measurement method of particle diameter ($D_{10}$, $D_{50}$)

$D_{10}$ and $D_{50}$ were measured using Mastersizer (registered trademark) produced by Malvern Instruments Ltd. as a laser diffraction particle size distribution analyzer. $D_{10}$ is a 10% diameter a volume-based cumulative particle size distribution (particles having the diameter or less account for 10 vol% of the entirety) and $D_{50}$ is a 50% diameter a volume-based cumulative particle size distribution (particles having the diameter or less account for 50 vol% of the entirety).

(3) Measurement method of tapping density

A density obtained by measuring the volume and mass of 100 g of a powder tapped 400 times with an Autotap manufactured by Quantachrome Instruments was defined as a tapping density. The measurement method is based on ASTM B527 and JIS K5101-12-2, and the fall height of the Autotap in the tap density measurement is 5 mm.

(4) Measurement of BET specific surface area

The BET specific surface area was measured by the nitrogen gas adsorption method using NOVA 4200e manufactured by Quantachrome Instruments. In order to measure the increment rate of the BET specific surface area due to pressing, the high crystallinity graphite powder was pressed by filling the high crystallinity graphite powder in a stainless-steel cylindrical mold and applying a pressure of 1GPa for 10 seconds.

(5) Measurement method of median value of circularity

The carbon material was purified by allowing it to pass through a filter with 106 $\mu$m openings to remove fine graphite refuse. 0.1 g of the obtained sample was added to 20 ml of ion-exchanged water and uniformly dispersed by adding 0.1 to 0.5 mass% of surfactant to prepare the sample solution for the measurement. The dispersion was performed by treating the mixture for five minutes using ultrasonic washing machine UT-105S (manufactured by Sharp Manufacturing Systems Corporation).

The obtained sample solution for the measurement was put in a flow-method particle image analyzer FPIA-3000 (manufactured by Sysmex Corporation) and 10,000 particles were subjected to image analysis in the LPF mode. The median value of the circularity was calculated from the obtained number-based circularity distribution.

(6) Production of negative electrode

Slurry was prepared from 97.5 parts by mass of the negative electrode active material comprising graphite, 0.5 parts by mass of carbon black (C45, manufactured by Imerys GC Japan), 1.0 part by mass of carboxymethylcellulose and an aqueous solution in which 40% of styrene butadiene rubber (SBR) fine particles as a solid ratio is dispersed so as to have a SBR content of 1.0 part by mass. The slurry was applied on a copper foil so as to make the applied amount be 9.5 to 10.0 mg/cm$^2$ to obtain a negative electrode plate. The negative electrode plate was dried in vacuum at 70°C for 1 hour.

(7) Pressing of negative electrode

The negative electrode plate manufactured in (6) was subjected to pressing by using a uniaxial press so as to adjust the electrode density 18 hours after pressing to 1.70 g/cm$^3$. The negative electrode after pressing was dried again in vacuum at 70°C for 1 hour. Pressing was performed by increasing pressure when it is difficult to increase the electrode. However, if the electrode density did not reach 1.70 g/cm$^3$ even by applying a maximum pressure of 300 MPa for 10 seconds, it was considered that it was substantially impossible to bring the electrode density to 1.70 g/cm$^3$.

(8) Production of positive electrode

97.5 parts by mass of lithium cobaltate (average particle diameter of 5 $\mu$m) as a positive electrode active material, 0.5 parts by mass of vapor grown carbon fiber (VGCF (registered trademark)-H, manufactured by SHOWA DENKO K.K.), 2.0 parts by mass of carbon black (C45, manufactured by Imerys GC Japan), 3.0 parts by mass of polyvinylidene fluoride (PVDF) were dispersed in N-methylpyrrolidone, and the dispersion was applied to a uniform thickness onto an aluminum foil so as to make the applied amount be 19.2 mg/cm$^2$ to obtain a positive electrode plate. The positive electrode plate was dried in vacuum at 70°C for 1 hour. Next, the electrode density was increased to 3.55 g/cm$^3$ by pressing the obtained positive electrode plate with a press roll, and a positive electrode was obtained.

(9) Production of a battery:

A battery formed of laminated single cells was fabricated using the produced negative electrode and positive electrode, and a propylene separator as a separator. 1 mol/liter of LiPF$_6$ was dissolved in a mixed solvent of ethyl carbonate, carbonic acid ethyl methyl, and vinylene carbonate at a volume ratio of 30:70:1 to be used as an electrolyte. The electrode produced in (7) was used as a negative electrode.

(10) Measurement of charge/discharge cycle capacity retention rate:

The charge/discharge was repeated 300 cycles, and the ratio of the discharge capacity after the 300th cycle to the discharge capacity after the third cycle was defined as the cycle capacity retention rate after 300 cycles.

(11) Measurement of negative electrode expansion

In order to measure the decrease in the electrode density due to charge/discharge cycles, the thickness of the negative electrode of the battery after charge/discharge cycles was measured, and the thickness of a copper foil was deducted from the electrode thickness to determine the thickness of the active material layer. Since the amount of the active material on the electrode remains the same after the charge/discharge cycles, the decrease in the electrode density was evaluated by measuring the thickness of the active material layer. Specifically, as to the electrode expansion after 10 cycles, a battery after the charge in the 10th cycle was disassembled in a dry atmosphere. The negative electrode from the battery was washed with carbonic acid ethyl methyl and dried, and the thickness of the active material layer $t_1$ at this point was measured. In addition, the electrode was pressed and dried, and the thickness of the active electrode layer at the time when the electrode density became 1.70 g/cm$^3$, $t_2$, was measured. The electrode expansion after 10 cycles was calculated from the following equation.

$$\texttt{Electrode expansion after 10 cycles = } (t_1/t_2-1)\times 100 \ (\%)$$

Electrode expansion after 100 cycles was measured in the same way.
The physical properties of the electrode active material (high crystallinity graphite and spherical graphite) used in Examples and Comparative Examples are shown in Table 2 and Table 3. The methods for producing each of the high crystallinity graphite and each of the spherical graphite are given below.

Table 2

| | Rhombohedral crystal ratio | Lc [nm] | Increment rate of the BET specific surface area due to pressing [%] | $D_{10}$ [μm] | $D_{50}$ [μm] |
|---|---|---|---|---|---|
| High crystallinity Graphite A1 | 0.00 | 235 | 22 | 6.6 | 14.3 |
| High crystallinity Graphite A2 | 0.00 | 116 | 23 | 6.3 | 13.6 |
| High crystallinity Graphite A3 | 0.00 | 133 | 24 | 7.9 | 17.1 |
| High crystallinity Graphite B1 1 | 0.00 | 95 | 119 | 11.0 | 19.0 |
| High crystallinity Graphite B2 | 0.04 | 218 | 59 | 10.6 | 17.7 |
| High crystallinity Graphite B3 | 0.00 | 79 | 20 | 5.7 | 16.2 |
| High crystallinity Graphite B4 | 0.00 | 115 | 25 | 4.6 | 11.5 |

Table 3

| | Median of the circularity | Tapping density [g/cm$^3$] | Structure inside a particle |
|---|---|---|---|
| Spherical graphite C1 | 0.98 | 1.38 | Solid |
| Spherical graphite C2 | 0.98 | 1.42 | Solid |
| Spherical graphite D1 | 0.92 | 0.69 | Not solid |
| Spherical graphite D2 | 0.94 | 1.05 | Not solid |

(High crystallinity graphite A1)

After subjecting Chinese green coke 1 to heat treatment at 1,100°C, the coke was observed under a polarizing microscope and image analysis was conducted. AR(60), the aspect ratio of an optical structure whose accumulated area corresponds to 60% of the total area of all the optical structures when areas of the detected optical structures are accumulated from the smallest structure in an ascending order, was 2.31.

The Chinese green coke 1 was pulverized with a bantam mill produced by Hosokawa Micron Corporation and subsequently coarse powder was excluded with a sieve having a mesh size of 32 $\mu$m. Next, the pulverized coke is subjected to air classification with Turboclassifier TC-15N produced by Nisshin Engineering Inc. to obtain a powder coke 1.

A graphite crucible was filled with the powder coke 1 and subjected to heat treatment for one week so that the maximum achieving temperature in Acheson furnace was adjusted to about 3,300°C to obtain high crystallinity graphite A1.

(High crystallinity graphite A2)

After subjecting Chinese green coke 2 to heat treatment at 1,100°C, the coke was observed under a polarizing microscope and image analysis was conducted. AR(60) was 2.41.

The Chinese green coke 2 was pulverized with a bantam mill produced by Hosokawa Micron Corporation and subsequently coarse powder was excluded with a sieve having a mesh size of 45 $\mu$m. Next, the pulverized coke was subjected to air classification with Turboclassifier TC-15N produced by Nisshin Engineering Inc. to obtain a powder coke 2, substantially containing no particles each having a particle diameter of 1.0 $\mu$m or less.

A graphite crucible was filled with the powder coke 2 and subjected to heat treatment for one week so that the maximum achieving temperature in Acheson furnace was adjusted to about 3,300°C to obtain high crystallinity graphite B4.

The obtained high crystallinity graphite B4 was subjected to air classification with Turboclassifier TC-15N produced by Nisshin Engineering Inc. so as to adjust $D_{10}$ to 6.3 $\mu$m to obtain high crystallinity graphite A2.

(High crystallinity graphite A3)

The Chinese green coke 1 was pulverized with a bantam mill produced by Hosokawa Micron Corporation and subsequently coarse powder was excluded with a sieve having a mesh size of 45 $\mu$m. Next, the pulverized coke was subjected to air classification with Turboclassifier TC-15N produced by Nisshin Engineering Inc. to obtain a powder coke 3.

A graphite crucible was filled with the powder coke 3 and subjected to heat treatment for one week so that the maximum achieving temperature in Acheson furnace was adjusted to about 3,300°C to obtain high crystallinity graphite A3.

(High crystallinity graphite B1)

100 parts by mass of high crystallinity A2, 2 parts by mass of petroleum-based pitch powder having 1 mass% of quinoline insoluble content and 48 mass% of $\beta$ resin content was put in a planetary centrifugal mixer, and dry-blended at 2,000 rpm for 20 minutes. The obtained mixture was subjected to calcination treatment at 1100°C to obtain high crystallinity graphite B1.

(High crystallinity graphite B2)

100 parts by mass of spherical natural graphite having $D_{50}$ of 17 $\mu$m in a particle size distribution, $d_{002}$ of 0.3354 nm, specific surface area of 5.9 m$^2$/g, and a median value of the circularity of 0.98, and 5 parts by mass of petroleum-based pitch powder having 1 mass% of quinoline insoluble content and 48 mass% of $\beta$ resin content was put in a planetary centrifugal mixer, and dry-blended at 2,000 rpm for 20 minutes. A graphite crucible was filled with the obtained mixture and subjected to heat treatment for one week so that the maximum achieving temperature in Acheson furnace was adjusted to about 3,300°C to obtain high crystallinity graphite B2.

(High crystallinity graphite B3)

Residue obtained by distilling crude oil produced in the West Coast of the United States of America under reduced pressure (18°API, wax content of 11 mass% and sulfur content of 3.5 mass%) was subjected to a small-sized delayed coking process. After keeping the drum inlet temperature at 490°C and the drum internal pressure to 200 kPa (2 kgf/cm$^2$) for ten hours, the drum was water-cooled to obtain black chunks. After pulverizing the obtained black chunks into pieces up to five centimeters in size with a hammer, they were dried at 200°C in a kiln to obtain coke 3. The coke 3 was observed under a polarizing microscope for the image analysis, and AR(60) was 1.91.

The coke 3 was pulverized, classified and graphitized in the same way as in the high crystallinity graphite A2, to obtain high crystallinity graphite B3.

(High crystallinity graphite B4)

High crystallinity graphite B4 was obtained in the process of producing the high crystallinity graphite A2.

(Spherical graphite C1)

A graphite crucible was filled with mesophase microbeads 1 having a diameter of around 12 $\mu$m and subjected to heat treatment for one week so that the maximum achieving temperature in Acheson furnace was adjusted to about 3,300°C to obtain spherical graphite C1. The spherical graphite C1 comprised solid particles. Here, solid particles mean that when 30 particles are observed in a cross-sectional SEM image of the particle, particles inside of which three or less of streaky voids having a length of 1 $\mu$m or more are observed are 25 or more.

(Spherical graphite C2)

A graphite crucible was filled with mesophase microbeads 2 having a diameter of around 21 $\mu$m and subjected to heat treatment for one week so that the maximum achieving temperature in Acheson furnace was adjusted to about 3,300°C to obtain spherical graphite C2. The spherical graphite C2 comprised solid particles.

(Spherical graphite D1)

Spherical graphite having $D_{50}$ of 9 $\mu$m was used as spherical graphite D1. The spherical graphite D1 comprised non-solid particles.

(Spherical graphite D2)

100 parts by mass of spherical graphite having $D_{50}$ of 17 $\mu$m and 5 parts by mass of petroleum-based pitch powder having 1 mass% of quinoline insoluble content and 48 mass% of $\beta$ resin content was put in a planetary centrifugal mixer, and dry-blended at 2,000 rpm for 20 minutes. A graphite crucible was filled with the obtained mixture and subjected to heat treatment for one week so that the maximum achieving temperature in Acheson furnace was adjusted to about 3,300°C to obtain spherical graphite D2. The spherical graphite D2 comprised non-solid particles.

Examples 1 to 5 and Comparative Example 1 to 8

By changing the combination and the blending ratio of the high crystallinity graphite and the spherical graphite as an electrode active material as shown in Table 4, electrodes and batteries were manufactured. The properties of these electrodes and batteries are also shown in Table 4.

Table 4

|  | High crystallinity graphite | Spherical graphite | Blending ratio | Electrode density * | Electrode expansion after 300 cycles [%] | Electrode expansion after 10 cycles [%] | Electrode expansion after 100 cycles [%] |
|---|---|---|---|---|---|---|---|
| Example 1 | A1 | C1 | 80:20 | ○ | 91 | 22 | 24 |
| Example 2 | A1 | C1 | 90:10 | ○ | 88 | 22 | 26 |
| Example 3 | A1 | C2 | 80:20 | ○ | 89 | 26 | 29 |
| Example 4 | A2 | C2 | 70:30 | ○ | 89 | 27 | 29 |
| Example 5 | A2 | C2 | 50:50 | ○ | 90 | 32 | 33 |
| Comparative Example 1 | A1 | - | 100:0 | ○ | 90 | 26 | 33 |
| Comparative Example 2 | B4 | C2 | 50:50 | ○ | 87 | 26 | 32 |

(continued)

|  | High crystallinity graphite | Spherical graphite | Blending ratio | Electrode density * | Electrode expansion after 300 cycles [%] | Electrode expansion after 10 cycles [%] | Electrode expansion after 100 cycles [%] |
|---|---|---|---|---|---|---|---|
| Comparative Example 3 | B1 | C2 | 70:30 | ○ | 85 | - | - |
| Comparative Example 4 | B2 | C2 | 50:50 | ○ | 84 | - | - |
| Comparative Example 5 | B3 | - | 70:30 | × | - | - | - |
| Comparative Example 6 | A3 | D1 | 50:50 | ○ | - | 45 | - |
| Comparative Example 7 | A3 | D2 | 50:50 | ○ | - | 56 | - |
| Comparative Example 8 | - | C2 | 0:100 | ○ | - | 35 | - |

* The grade is identified by the following symbols:
○: The electrode density reached 1.70 $g/cm^3$ by applying pressure.
X: The electrode density did not reach 1.70 $g/cm^3$ by applying a pressure of 300 GPa for 10 seconds.

One can see the following from the results shown in Table 4.

In Examples 1 to 5, batteries showed good properties through the combination of suitable high crystallinity graphite and spherical graphite.

In Comparative Example 1, the battery had a good capacity retention rate after 300 cycles due to the use of high crystallinity graphite only, in which the surface reaction is suppressed. However, the decrease in the electrode density (increase in the electrode expansion) was large due to the orientation of the high crystallinity graphite in the electrode layer, and the graphite material was not suitable for a battery which is required to have a high capacity per volume.

In Comparative Example 2, $D_{10}$ of the high crystallinity graphite is too small and charge and discharge reaction in the electrode becomes non-uniform, resulting in a large electrode expansion. Accordingly, the graphite material was not suitable for a battery which is required to have a high capacity per volume.

In Comparative Example 3, the increment rate of the BET specific surface area at the time of pressing is large and the particle structure is unstable in the high crystallinity graphite. Therefore, a collapse of particles was caused in the pressing process at the time of producing an electrode, resulting in a low capacity retention rate after 300 cycles. Accordingly, the graphite material was not suitable for a battery which is required to have a high capacity per volume.

In Comparative Example 4, the rhombohedral crystal ratio of the high crystallinity graphite is too high, and a large change in a particle structure is caused when charge and discharge are repeated, resulting in a low capacity retention rate after 300 cycles. Accordingly, the graphite material was not suitable for a battery which is required to have a high capacity per volume.

In Comparative Example 5, Lc of the high crystallinity graphite is not sufficiently large and the electrode density of 1.70 $g/cm^3$ or more is not achieved. Accordingly, the graphite material was not suitable for a battery which is required to have a high capacity per volume.

In Comparative Examples 6 and 7, the tapping density of the spherical graphite is not sufficiently high, and the graphite material has little effect of suppressing the orientation in the electrode. On the other hand, there is a problem that the spherical graphite particles slide over each other at the time of charge and discharge, resulting in a large electrode expansion. Accordingly, the graphite material was not suitable for a battery which is required to have a high capacity per volume.

In Comparative Example 8, only the spherical graphite was used and there was a problem that the spherical graphite particles slide over each other at the time of charge and discharge, resulting in a large electrode expansion. Accordingly, the graphite material was not suitable for a battery which is required to have a high capacity per volume.

As discussed above, an electrode density of 1.70 $g/cm^3$ or more can be achieved by using the graphite material of the present invention, which enables downsizing of a battery. In addition, a battery using the graphite material of the present invention as an electrode active substance has a capacity retention rate after 300 cycles of more than 88%, and therefore has good cycle characteristics. The electrode expansion after 10 cycles and 100 cycles can be suppressed to 30% or less, and therefore the battery can maintain a high capacity per volume even after repeating charge and discharge.

Industrial Applicability

The lithium-ion secondary battery using the graphite material of the present invention as an electrode active material is small-sized and lightweight, and has a high discharge capacity and high cycle characteristics. Therefore, it can be suitably used for a wide range of products from mobile phones to electric tools, and even for a hybrid automobile.

**Claims**

1. A graphite material, comprising high crystallinity graphite and spherical graphite, in which high crystallinity graphite:

   (1) a rhombohedral crystal ratio by X-ray diffractometry is 0.02 or less,
   (2) a thickness in a c-axis direction of crystallite Lc is 90 nm or more,
   (3) when a pressure of 1 GPa for 10 seconds is applied to the high crystallinity graphite, the increment rate of the BET specific surface area after applying the pressure to the BET specific surface area before applying the pressure is 90% or less, and
   (4) a 10% particle diameter in a volume-based cumulative particle size distribution, $D_{10}$, is 5.0 $\mu$m or more; and

   in which spherical graphite:

   (1) a tapping density is 1.20 g/cm3 or more, and
   (2) a median of the circularity is 0.90 or more;

   and the ratio by mass of the high crystallinity graphite and the spherical graphite is 95:5 to 40:60.

2. The graphite material according to claim 1, wherein the 50% particle diameter in a volume-based cumulative particle size distribution, $D_{50}$, of the high crystallinity graphite is 25.0 $\mu$m or less.

3. The graphite material according to claim 1 or 2, wherein the high crystallinity graphite is artificial graphite.

4. The graphite material according to any one of claims 1 to 3, wherein particles of the high crystallinity graphite are solid.

5. The graphite material according to any one of claims 1 to 4, wherein the spherical graphite is artificial graphite.

6. The graphite material according to any one of claims 1 to 5, wherein particles of the spherical graphite are solid.

7. A negative electrode for a secondary battery comprising, as an active material, the graphite material of any one of claims 1 to 6.

8. The negative electrode according to claim 7, wherein the secondary battery is a lithium ion secondary battery.

# EP 3 477 749 A1

**INTERNATIONAL SEARCH REPORT**

International application No.

PCT/JP2017/022550

**A. CLASSIFICATION OF SUBJECT MATTER**
*H01M4/587*(2010.01)i, *H01M4/36*(2006.01)i

According to International Patent Classification (IPC) or to both national classification and IPC

**B. FIELDS SEARCHED**

Minimum documentation searched (classification system followed by classification symbols)
H01M4/587, H01M4/36

Documentation searched other than minimum documentation to the extent that such documents are included in the fields searched
Jitsuyo Shinan Koho        1922–1996   Jitsuyo Shinan Toroku Koho   1996–2017
Kokai Jitsuyo Shinan Koho   1971–2017   Toroku Jitsuyo Shinan Koho   1994–2017

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2012/144617 A1 (Showa Denko Kabushiki Kaisha), 26 October 2012 (26.10.2012), & US 2013/0330620 A1   & EP 2667436 A1 & CN 102844918 A        & KR 10-2012-129880 A | 1-8 |
| A | JP 2012-33375 A (Mitsubishi Chemical Corp.), 16 February 2012 (16.02.2012), (Family: none) | 1-8 |
| A | JP 2015-164127 A (Mitsubishi Chemical Corp.), 10 September 2015 (10.09.2015), (Family: none) | 1-8 |
| A | WO 2015/152115 A1 (NEC Energy Devices, Ltd.), 08 October 2015 (08.10.2015), & US 2017/0187064 A1   & CN 106463767 A | 1-8 |

☒ Further documents are listed in the continuation of Box C.    ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>    26 July 2017 (26.07.17) | Date of mailing of the international search report<br>    08 August 2017 (08.08.17) |
|---|---|
| Name and mailing address of the ISA/<br>    Japan Patent Office<br>    3-4-3,Kasumigaseki,Chiyoda-ku,<br>    Tokyo 100-8915,Japan | Authorized officer<br><br>Telephone No. |

Form PCT/ISA/210 (second sheet) (January 2015)

18

**INTERNATIONAL SEARCH REPORT**

International application No.

PCT/JP2017/022550

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2000-243396 A  (Hitachi, Ltd.), 08 September 2000 (08.09.2000), & US 2003/0129494 A1    & EP 1032062 A1 & KR 2000/58145 A | 1-8 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3534391 B
- JP 3361510 B
- JP H07320740 A
- JP 4738553 B
- JP 2001023638 A
- JP 2005515957 A
- JP 2001236950 A
- US 6632569 B
- US 6344296 B
- JP 7320740 A
- US 5587255 A
- US 8372373 B
- US 20030160215 A1
- JP S6249363 B
- JP 2778434 B

**Non-patent literature cited in the description**

- **I. NODA ; M. INAGAKI.** *Japan Society for the Promotion of Science, 117th Committee material,* 1963, 117-71, A-1
- **M. INAGAKI et al.** *Japan Society for the Promotion of Science, 117th committee material,* 1972, 117-121, C-5
- **M. INAGAKI.** *Tanso,* 1963, 25-34
- Modern Carbon Material Experimental Technology. Sipec Corporation, 2001, 1-8
- **M. INAGAKI.** *Tanso,* 1963, vol. 36, 25-34